# FASCICULE DE BREVET EUROPEEN

(11) **EP 4 271 869 B1**
(45) Date de publication et mention de la délivrance du brevet: **21.08.2024**
(21) Numéro de dépôt: 22704431.0
(22) Date de dépôt: 10.02.2022
(51) Int. Cl.: D04H 1/04, C02F 1/68, D04H 1/4266, D04H 1/46, E02B 15/04, E02B 15/10

(54) **FILM ABSORBANT**
ABSORBIERENDER FILM
ABSORBENT FILM

(30) Priorité: 04.03.2021 FR 2102093
(43) Date de publication de la demande: 08.11.2023
(73) Titulaire: Capillum, 63000 Clermont-Ferrand (FR)
(72) Inventeur: TAYLOR, James, 63000 Clermont-Ferrand (FR); DOISNEAU, David, 63000 Clermont-Ferrand (FR)
(74) Mandataire: Gabriel, Franck
(86) Numéro de dépôt international: PCT/IB2022/051186
(87) Numéro de publication internationale: WO 2022/185135

(56) Documents cités:
- WO-A1-00/53851
- US-A- 4 832 852
- US-A1- 2014 217 004

## Description

### DOMAINE TECHNIQUE DE L'INVENTION

La présente invention concerne un film absorbant constitué d'un agencement de fibres non tissées.

### ETAT DE LA TECHNIQUE ANTERIEURE

Il existe de nombreuses situation dans lesquelles des produits hydrocarbures sont accidentellement déversés à des endroits où leur présence pourrait causer d'importants dégâts en particulier à l'environnement et/ou à des bâtiments. Pour récupérer les hydrocarbures, on connaît divers types de films absorbants prévus pour être posés sur la nappe à récupérer. Après absorption des hydrocarbures par le film absorbant, ce dernier est ensuite retiré et transporté au site de récupération pour traitement et sécurisation.

Par exemple, le document FR2778579 décrit une nappe multicouche de protection, ainsi qu'un tapis et un dispositif de protection comprenant une telle nappe. La nappe est utile par exemple pour la protection des sols contre la pollution par des hydrocarbures ou des solvants industriels. Elle présente une structure stratifiée constituée par l'association d'un voile non tissé hydrophobe supérieur, d'une couche hydrophobe de fibres thermoplastiques formant le matelas absorbant pour les hydrocarbures et les solvants industriels habituels, d'un film étanche thermoplastique et d'un voile inférieur. Cette mise en oeuvre, avec des fibres thermoplastiques et plusieurs couches est particulièrement complexe et coûteuse à réaliser.

Le document US2014/217004 décrit une structure mono-fibres pour absorber les hydrocarbures, composée de matériaux fibreux hydrophobes synthétiques, ou de fibres naturelles.

Le document WO00/53851 décrit une structure non tissée et consolidée pour absorber les hydrocarbures, composée uniquement de cheveux.

Le document US4832852 décrit une structure non tissée et consolidée pour absorber les hydrocarbures, comprenant une couche interne en polypropylène et deux couches externes de fibres de coton.

On connaît également des films constitués d'un agglomérat de fibres de polypropylène. Les qualités absorbantes de ces fibres constituent certes un attrait, toutefois ces fibres, bien que recyclables, ne sont pas biodégradables et peuvent présenter un risque à long terme pour l'environnement.

Pour pallier les différents inconvénients préalablement évoqués, l'invention prévoit différents moyens techniques.

### EXPOSE DE L'INVENTION

Tout d'abord, un premier objet de l'invention consiste à permettre la mise en oeuvre d'un film absorbant à faible coût et en faisant une récupération et un recyclage des chutes de cheveux des salons de coiffures.

Un autre objectif de l'invention consiste à prévoir un film absorbant comportant des matériaux biodégradables naturels tout en permettant une optimisation des capacités de rétention d'hydrocarbures.

Un autre objectif de l'invention consiste à prévoir un film absorbant dont les caractéristiques mécaniques, et notamment la résistance à la traction, sont optimales.

Un autre objectif de l'invention consiste à prévoir un film absorbant dont les caractéristiques mécaniques et visuelles, en particulier en surface, sont homogènes et constantes.

Un autre objectif de l'invention consiste à prévoir un film absorbant avec optimisation des caractéristiques mécaniques afin de faciliter les manipulations, en particulier lors des phases de récupération des hydrocarbures.

Encore un autre objectif de l'invention consiste à prévoir un film absorbant présentant une grande facilité de stockage avant mise en place en milieu naturel et un respect du milieu naturel environnant.

Pour ce faire, l'invention prévoit un film absorbant d'hydrocarbures constitué d'un agencement de fibres naturelles non tissés formant un plan longitudinal, ledit agencement comportant des cheveux (ou fibres capillaires) et des fibres laineuses (laine) mélangées et assemblées en agencement consolidé non tissé, les fibres laineuses constituants un taux massique supérieur à 20% de l'ensemble des fibres, et plus préférentiellement un taux massique supérieur à 30% de l'ensemble des fibres, et encore plus préférentiellement un taux massique supérieur à 40% de l'ensemble des fibres du film.

L'utilisation de deux types de fibres complémentaires, de préférence sans aucun autre matériau, constituant ou additif, permet d'obtenir des propriétés mécaniques considérablement améliorées en regard d'un film comportant un seul type de fibres. Par ailleurs, les proportions massiques prévues permettent encore d'optimiser les performances mécaniques. Enfin, le fait de combiner et enchevêtrer entre elles ces deux types de fibres écaillées induit un double effet de maintien, soit celui généré par la consolidation et celui des micro-accrochages entre les écailles des fibres.

Selon un mode de réalisation avantageux, la consolidation du film est réalisée par la présence d'une pluralité de ponts traversant au moins une partie des couches de fibres, lesdits ponts étant répartis sur l'ensemble de la surface du film absorbant.

De manière avantageuse, les ponts traversant sont réalisés par aiguilletage ou hydroliage ou par jets d'air.

Les filaments agencés sensiblement transversalement sont répartis sensiblement uniformément sur la surface du film et forment un moyen de liaison mécanique entre les filaments orientés sensiblement longitudinalement. Le film présente ainsi des caractéristiques de résistance mécanique particulièrement avantageuses.

Selon un mode de réalisation avantageux, le film absorbant est constitué uniquement de fibres capillaires et de fibres laineuses.

Ce mode de réalisation, sans additif ou complément ou réactif ou autre matériau ou couche de support, permet d'obtenir un produit 100% naturel, écologique, biodégradable sans résidu.

De manière avantageuse, le film est enroulé pour former un rouleau facilitant le stockage et déroulable pour mise en place sur une nappe d'hydrocarbures à absorber.

Selon encore un mode de réalisation avantageux, le film absorbant comporte un mélange de fibres capillaires et de fibres laineuses préalablement dispersées et mélangées pour constituer des lots d'au moins 10 kg de fibres dispersées et mélangées de façon à former un ensemble aléatoire de fibres hétérogènes avant leur mise en forme sous forme de film.

De manière avantageuse, les fibres laineuses sont des fibres de laine effilochée écrue. Du fait de sa structure hélicoïdale, la laine effilochée écrue procure un effet de cohésion avec les autres fibres, pour une meilleure résistance mécanique du film. On utilise avantageusement de la laine de mouton ou de chèvre.

Selon encore un mode de réalisation avantageux, le film est formé en laizes. On prévoit par exemple des laizes de 80cm de large, de 5m de long et 4mm d'épaisseur, avec une densité de 400g/m2. La densité du film se situe entre 300 et 1200g/m2, et préférentiellement entre 350 et à 800g/m2, et encore plus préférentiellement entre 350 et 500g/m2. Ce type de format est particulièrement adapté à la récupération d'hydrocarbures, et permet un bon compromis entre les facilités de stockage par enroulement et les caractéristiques avantageuses d'absorption et rétention des produits à récupérer.

### DESCRIPTION DES FIGURES

Tous les détails de réalisation sont donnés dans la description qui suit, complétée par les figures 1 à 5, présentées uniquement à des fins d'exemples non limitatifs, et dans lesquelles:
- la figure 1 est une représentation schématique en vue de dessus de films absorbant non tissés consolidés de cheveux et de laine posés sur une nappe d'hydrocarbure, en situation de récupération de la nappe, avec l'assistance d'un bateau de service ;
- la figure 2 est une coupe schématique dans le plan transversal de la largeur d'un exemple de film biodégradable réalisé par un agencement non tissé consolidé de cheveux et de laine;
- la figure 3 est une coupe schématique dans le plan transversal de la hauteur d'un exemple de film biodégradable réalisé par un agencement non tissé consolidé de cheveux et de laine;
- la figure 4 est une représentation schématique illustrant une phase de consolidation d'un exemple d'agencement non tissé de cheveux et de laine par aiguilletage ;
- la figure 5 illustre un tableau de synthèse présentant les résultats d'essais pour comparer les propriétés mécaniques de plusieurs exemples de films biodégradables non tissées consolidés de cheveux et de laine.

### DESCRIPTION DETAILLEE DE L'INVENTION

### Définitions

Un non-tissé non consolidé se compose d'un ensemble de fibres simplement disposées ensemble en vrac, non liées entre elles. La solidité d'un non-tissé non consolidé repose d'une part sur la solidité et la résistance des fibres elles-mêmes et d'autre part sur les forces qui lient ces fibres entre elles.

On entend par film non-tissé consolidé un film constitué d'une pluralité de couches de filaments ou fibres maintenues entre elles par une pluralité de ponts traversant au moins une portion des couches. Les ponts sont réalisés par des fibres orientées transversalement au plan principal du film et enchevêtrées dans les couches de fibres orientées dans le plan principal du film.

Plusieurs procédés de consolidation peuvent être utilisés, comme par exemple l'aiguilletage ou l'hydroliage ou par jets d'air.

On entend par aiguilletage un procédé de consolidation qui consiste à enchevêtrer mécaniquement une ou plusieurs couches de fibres ou filaments à l'aide de multiples aiguilles à crocheter.

On entend par hydroliage ou enchevêtrement par eau un procédé d'assemblage mécanique par consolidation en utilisant une pluralité de jets d'eau à haute pression traversant un film à consolider.

Avant de consolider les fibres ou les filaments, une étape d'ouvraison des fibres est préférentiellement effectuée.

On entend par ouvraison un procédé mécanique consistant à décomposer les couches compressées ou amas de fibres en petites touffes pour en faciliter le mélange. En entrée de l'ouvreuse, des amas de laine effilochée écrue compact et des cheveux non mélangés sont transformés en un mélange homogène de laine effilochée écrue et de cheveux. L'ouvreuse est alimentée en laine effilochée écrue compact et en filaments de cheveux bruts.

On entend par consolidation à double effet d'accrochage un mode de consolidation d'un film comportant des fibres écaillées tels que les cheveux et la laine.

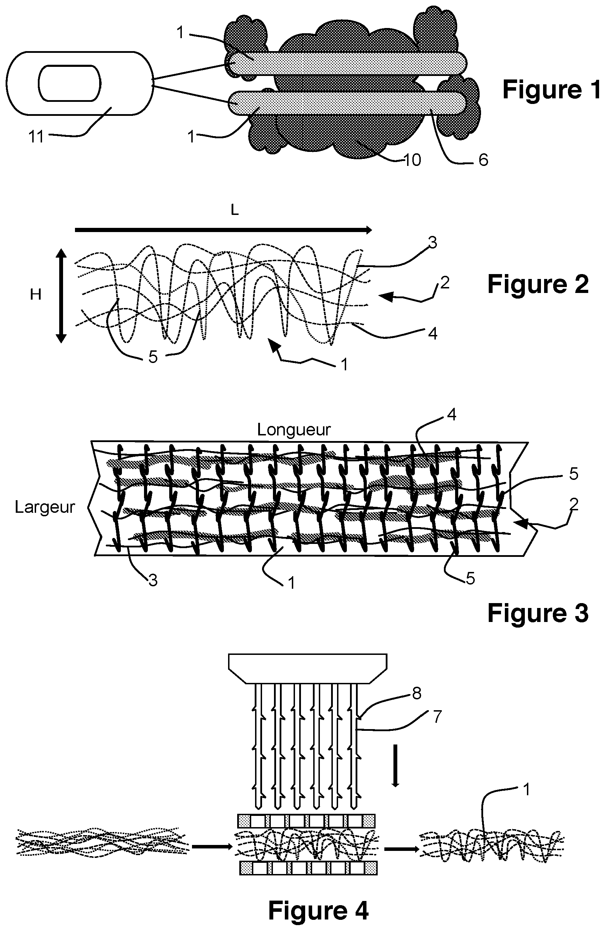

La figure 1 illustre un exemple de film 1 absorbant. Dans cet exemple, deux laizes 6 de film 1 sont posées sur une nappe 10 d'hydrocarbure afin de récupérer les hydrocarbures avant que ceux-ci se dispersent. Un bateau 11 de service, permet, avant l'intervention, de transporter les films 1 sur place, de les dérouler et les poser sur la nappe 10. Le bateau 11 de service permet ensuite, après l'intervention, de récupérer les films imbibés d'hydrocarbures, par exemple en les enroulant, pour pouvoir ensuite les transporter vers le lieu de récupération.

Les films 1 absorbant sont réalisés à l'aide de fibres naturelles 2 de cheveux 3 et des fibres de laine 4. Les fibres naturelles utilisées sont de toutes longueurs, y compris les cheveux courts. Les figures 2 et 3 illustrent, de façon schématique, des exemples de mise en oeuvre de films 1 avec ces fibres.

La figure 2 montre un exemple d'un film 1 en coupe transversal dans le sens de la largeur. Tel qu'illustré, le film comporte une pluralité de fibres naturelles 2, essentiellement des cheveux 3 et des fibres laineuses 4 enchevêtrées entre elles grâce à une mise en forme avec consolidation.

Le procédé d'obtention du film comporte deux phases principales. La première phase consiste à réaliser une couche homogène avec un mélange de cheveux et de laine dans les proportions souhaitées. Le seconde phase, dites de consolidation, permet de consolider la ou les couches pour obtenir un film présentant d'excellentes propriétés mécaniques.

Pour réaliser la première phase, les cheveux sont mélangés avec la laine écrue en prévoyant un taux de laine supérieur à 20% du mélange total. L'utilisation de laine effilochée écrue permet de maintenir la cohésion de l'ensemble des fibres capillaires.

Les cheveux et la laine sont disposés dans des chargeuses-peseuses qui permettent d'effectuer un pesage des fibres pour obtenir les proportions massiques souhaitées de chacun des types de fibres (soit le pourcentage de cheveux et le pourcentage de laine en regard du poids total des cheveux et de la laine), puis les cheveux tombent sur un tapis roulant où ils sont humidifiés pour faciliter la cohésion entre les fibres, puis, la laine tombe sur le tapis. L'ensemble des fibres (cheveux et laine) passent alors dans une ouvreuse qui permet d'ouvrir et mélanger les fibres avant d'être transportées par air où un aimant permet de retirer les objets métalliques pouvant demeurer dans les fibres avant de passer dans une ouvreuse plus fine pour mélanger plus intimement l'ensemble. Le tout est ensuite transporté par air vers la nappeuse. La nappeuse permet de créer une nappe homogène constituée du mélange cheveux et laine dans les proportions choisies au départ.

Lors de la phase de consolidation, les couches de fibres nappées sont ensuite consolidées à l'aide d'une multiplicité de ponts 5 transversaux aux couches répartis sur l'ensemble de la surface du film. Pour créer les ponts, on utilise de préférence un procédé d'aiguilletage. La figure 4 illustre, de façon schématique, un exemple d'opération d'aiguilletage. Il s'agit d'un procédé d'assemblage mécanique permettant d'effectuer une consolidation d'un film non-tissé déjà formé par nappage. Une pluralité d'aiguilles 7 pourvues de crochets 8 sont agencées transversalement au plan principal ou à la surface de l'agencement de fibres, et effectuent un mouvement d'aller-retour à travers le film. Une partie des fibres de laine et/ou de cheveux sont accrochées par les crochets 8 et sont entraînées suivant le mouvement transversal des aiguilles 7, créant ainsi un enchevêtrement avec les fibres de laine ou de cheveux orientées longitudinalement. Les aiguilles sont agencées pour former une surface d'aiguilletage, avec une densité adaptée au produit à fabriquer. Par exemple, certains essais ont été réalisés avec une densité de 3660 aiguilles par m2 pour une première phase d'aiguilletage, et une densité de 7000 aiguilles par m2 pour une seconde phase. Chaque phase comporte avantageusement plusieurs mouvements d'aller-retour des aiguilles.

Enfin, les aiguilles peuvent être agencées sur une seule face, ou en opposition, sur les deux faces du film à consolider. La figure 3 illustre, de façon schématique, un exemple de film 1 obtenu par consolidation avec des aiguilles en opposition. La figure 3 montre le film 1 en coupe transversale dans le sens de la hauteur. On observe les cheveux 3 et les fibres de laine 4, qui sont globalement dans le sens de la longueur du film. Les ponts 5, formés par les fibres de cheveux et/ou de laine sont agencés dans le sens de hauteur.

D'autres procédés peuvent également être utilisés, comme par exemple l'hydroliage ou la consolidation par jets d'eau à haute pression.

Selon encore un mode de réalisation avantageux, le film absorbant comporte un mélange de fibres capillaires et de fibres laineuses préalablement dispersées et mélangées pour constituer des lots d'au moins 10 kg de fibres dispersées et mélangées de façon à former un ensemble aléatoire de fibres hétérogènes avant leur mise en forme sous forme de film.

Par exemple, lors d'essais, les fibres capillaires utilisées provenaient de cheveux contenus dans des sacs de 1 m3 soit environ 100 kg, représentant environ 125000 coupes de cheveux avec des teneurs différentes et une source d'homogénéité fiable et récurrente. Les cheveux à recycler sont le plus souvent issus de salon de coiffure. Le regroupement des cheveux ainsi récupérés permet d'utiliser des cheveux de multiples personnes, avec des caractéristiques, en particulier de couleurs, très variées, et permet d'obtenir un paillage de caractéristiques de couleurs et de résistance mécanique plus uniformes.

La densité du film absorbant tel que préalablement décrit se situe entre 0,07g/cm3 et 0,15g/cm3, et plus préférentiellement entre 0,09 et 0,12 g/cm3.

### Tests comparatifs de résistance mécanique

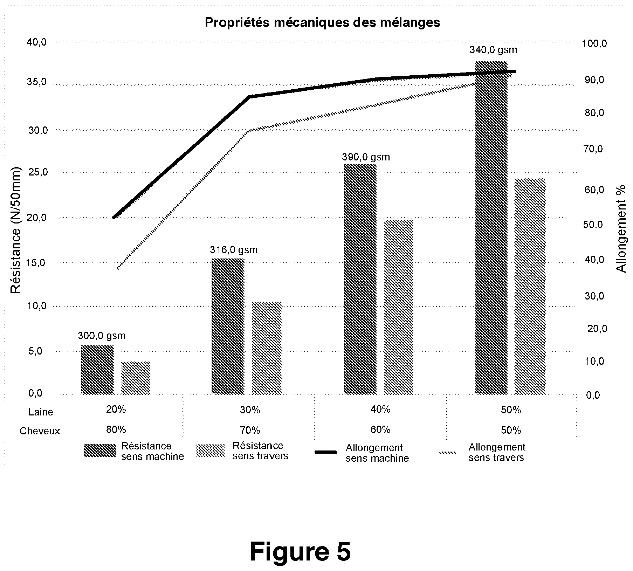

La figure 5 présente un tableau comparatif issu d'essais réalisés avec des films absorbants selon l'invention. Le tableau illustre d'une part les valeurs de résistance dans le sens machine ou longueur et dans le sens transversal ou largeur en N/50mm (échelle de gauche) et les valeurs d'allongement dans le sens machine ou longueur et dans le sens transversal ou largeur en pourcentage (échelle de droite). Les comparaisons ont été effectuées avec des films comportant diverses proportions massiques de laine et de cheveux, à savoir 20% de laine avec 80% de cheveux, 30% de laine avec 70% de cheveux, 40% de laine avec 60% de cheveux, et 50% de laine avec 50% de cheveux. On observe que la résistance mécanique augmente dès qu'on prévoit un mélange de fibres avec plus de 20% de laine, plus préférentiellement un taux supérieur à 30% de laine et encore plus préférentiellement au moins 40% de laine. On observe en outre que l'ajout de laine effilochée améliore considérablement les propriétés mécaniques du non tissé (par un facteur 3 à 30% de laine et par un facteur de presque 8 à 50% en sens machine). Cette augmentation est particulièrement avantageuse pour la résistance mécanique dans le sens de la longueur, ce qui permet de manipuler les films de grande longueur sans risque de créer des ruptures accidentelles. Ces propriétés de haute résistance sont particulièrement avantageuses pour permettre de récupérer les films imbibés d'hydrocarbures sans risque de rupture.

Selon les tests effectués, en sens machine, on obtient par exemple une résistance à une charge de 15 N/50mm pour un film avec 70% de cheveux et 30% de laine (densité de 316g/m2) et de 25 N/50mm pour un film avec 60% de cheveux et 40% de laine (densité de 390 g/m2), comparativement à une résistance de seulement 5 N/50mm pour un film avec 80% de cheveux et 20% de laine (densité de 300 g/m2).

On obtient par exemple un allongement dans le sens machine supérieure à 80% pour un film avec 60% de cheveux et 40% de laine (densité 390g/m2), et un allongement dans le sens machine équivalente à 90% pour un film avec 50% de cheveux et 50% de laine (densité de 340g/m2), comparativement à un allongement dans le sens machine de seulement 50% pour un film avec 80% de cheveux et 20% de laine (densité de 300g/m2).

### Tests comparatifs d'absorption

**Des** essais ont été réalisés afin de vérifier les propriétés absorbantes des films préalablement décrits. Une référence, avec un film synthétique en polypropylène a été utilisée, afin de démontrer les performances au moins équivalente d'un produit naturel et biodégradable.
Huile utilisée : 10W40
Poids des films absorbants (en PP) : 3g.
Taille des films absorbants (en PP) : 10 cm x 10 cm.
Quatre films de ce type ont été utilisés.
Poids des films absorbants (non-tissé consolidé cheveux et laine) : 3g.
Taille des films absorbants (non-tissé consolidé cheveux et laine) : 9 cm x 9 cm. Quatre films de ce type ont été utilisés.

Les essais ont été réalisés selon deux protocoles, à savoir selon la méthode EDANA version américaine, et selon la méthode EDANA version européenne.
Protocole 1 : Test selon la méthode EDANA (version américaine): deux minutes d'immersion dans l'huile (soit une minute sur chaque face) mais sans égouttage. Huile utilisée : 10W40.

| **Matériau** | **Poids initial** | **Poids final** | **Capacité d'absorption** |
|---|---|---|---|
| Polypropylène | **3g** | **48g** | **X16** |
| Polypropylène | **3g** | **50g** | **X16,66** |
| 50% cheveux / 50% laine | **3g** | **58g** | **X19,33** |
| 50% cheveux / 50% laine | **3g** | **57g** | **X19** |

Protocole 2 : Test selon la méthode EDANA (version européenne): deux minutes d'immersion dans l'huile (soit une minute sur chaque face) et deux minutes d'égouttage à la verticale.
Huile utilisée : 10W40.

| **Matériau** | **Poids initial** | **Poids final** | **Capacité d'absorption** |
|---|---|---|---|
| Polypropylène | **3g** | **30g** | **X10** |
| Polypropylène | **3g** | **35g** | **X11,66** |
| 50% cheveux / 50% laine | **3g** | **30g** | **X10** |
| 50% cheveux / 50% laine | **3g** | **33g** | **X11** |

### Constatations suite aux essais:

Les films absorbants selon l'invention ont une capacité d'absorption et de rétention au moins équivalente, voire supérieure à celle des films en polypropylène. Pour des situations visant à réduire l'utilisation de produits non naturels et/ou non écologiques, on constate que les films selon l'invention présentent une alternative biodégradable particulièrement avantageuse.

### Numéros de référence employés sur les figures

- 1: Film absorbant
- 2: Fibres naturelles non tissées
- 3: Cheveux
- 4: Laine
- 5: Ponts
- 6: Laizes
- 7: Aiguille
- 8: Crochet
- 9: ---
- 10: Nappe d'hydrocarbure
- 11: Bateau de service
- 12: -----

## Revendications

1. Film (1) absorbant d'hydrocarbures constitué d'un agencement de fibres (2) naturelles non tissés formant un plan longitudinal, ledit agencement comportant des cheveux (3) et des fibres laineuses (4) mélangés et assemblés en agencement consolidé non tissé, les fibres laineuses constituants un taux massique supérieur à 20% de l'ensemble des fibres, et plus préférentiellement un taux massique supérieur à 30% de l'ensemble des fibres, et encore plus préférentiellement un taux massique supérieur à 40% de l'ensemble des fibres du film.

2. Film absorbant selon la revendication 1, dans lequel la consolidation du film est réalisée par la présence d'une pluralité de ponts (5) traversant au moins une partie des couches de fibres, lesdits ponts étant répartis sur l'ensemble de la surface du film absorbant.

3. Film absorbant selon la revendication 2, dans lequel les ponts (5) traversant sont réalisés par aiguilletage ou hydroliage ou par jets d'air.

4. Film absorbant selon l'une quelconque des revendications 1 à 3, constitué uniquement de fibres capillaires et laineuses.

5. Film absorbant selon l'une quelconque des revendications 1 à 4, dans lequel les fibres laineuses (4) sont des fibres de laine effilochée écrue.

6. Film absorbant selon l'une quelconque des revendications 1 à 5, enroulé pour former un rouleau facilitant le stockage et déroulable pour mise en place sur une nappe d'hydrocarbure à absorber.

7. Film absorbant selon l'une quelconque des revendications 1 à 6, dans lequel le film est formé en laizes (6).

## Patentansprüche

1. Kohlenwasserstoffabsorbierende Folie (1), die aus einer Anordnung von natürlichen Fasern (2) aus Vliesstoff besteht, die eine Längsebene bilden, wobei die Anordnung Haare (3) und Wollfasern (4) enthält, die in einer verfestigten Vliesstoffanordnung gemischt und zusammengefügt sind, wobei die Wollfasern einen Massenanteil von mehr als 20 % der Gesamtheit der Fasern und vorzugsweise einen Massenanteil von mehr als 30 % der Gesamtheit der Fasern und noch mehr vorzugsweise einen Massenanteil von mehr als 40 % der Gesamtheit der Fasern der Folie bilden.

2. Absorbierende Folie nach Anspruch 1, bei der die Verfestigung der Folie durch das Vorhandensein einer Vielzahl von Brücken (5) erreicht wird, die mindestens einen Teil der Faserschichten durchdringen, wobei die Brücken über die gesamte Oberfläche der absorbierenden Folie verteilt sind.

3. Absorbierende Folie nach Anspruch 2, wobei die durchgehenden Brücken (5) durch Vernadelung oder Hydroliasing oder durch Luftstrahlen hergestellt werden.

4. Absorbierende Folie nach einem der Ansprüche 1 bis 3, die nur aus Haar- und Wollfasern besteht.

5. Absorbierende Folie nach einem der Ansprüche 1 bis 4, wobei die wolligen Fasern (4) Fasern aus ungebleichter, zerfaserter Wolle sind.

6. Absorbierende Folie nach einem der Ansprüche 1 bis 5, die zu einer Rolle aufgewickelt ist, um die Lagerung zu erleichtern, und die zur Platzierung auf einer zu absorbierenden Kohlenwasserstoffbahn abgerollt werden kann.

7. Absorbierende Folie nach einem der Ansprüche 1 bis 6, wobei die Folie in Bahnen (6) geformt ist.

## Claims

1. Hydrocarbon-absorbent film (1) consisting of an arrangement of natural non-woven fibers (2) forming a longitudinal plane, said arrangement comprising hair (3) and woolly fibers (4) mixed and assembled in a non-woven consolidated arrangement, the woolly fibers constituting a mass ratio greater than 20% of all the fibers, and more preferably a mass ratio greater than 30% of all the fibers, and even more preferably a mass ratio greater than 40% of all the fibers in the film.

2. Absorbent film according to claim 1, in which the consolidation of the film is achieved by the presence of a plurality of bridges (5) crossing at least part of the fiber layers, said bridges being distributed over the entire surface of the absorbent film.

3. Absorbent film according to claim 2, in which the through bridges (5) are produced by needling or hydro-bonding or by air jets.

4. Absorbent film according to any one of claims 1 to 3, consisting solely of capillary and woolly fibers.

5. Absorbent film according to any one of claims 1 to 4, wherein the woollen fibers (4) are unbleached frayed wool fibers.

6. Absorbent film according to any one of claims 1 to 5, wound to form a roll for easy storage and unwindable for placement on a hydrocarbon slick to be absorbed.

7. Absorbent film according to any one of claims 1 to 6, wherein the film is formed into strips (6).
